# EUROPEAN PATENT APPLICATION

(11) **EP 2 000 891 A2**
(43) Date of publication of application: **10.12.2008**
(21) Application number: 08005891.0
(22) Date of filing: 27.03.2008
(51) Int. Cl.: G06F 3/048

(54) **Device and method for executing a menu in mobile terminal**

(30) Priority: 29.05.2007 KR 20070051775
(71) Applicant: Samsung Electronics Co., Ltd., Suwon-si Gyeonggi-do (KR)
(72) Inventor: Park, Won Joo, Suwon-si Gyeonggi-do (KR)
(74) Representative: Lang, Johannes

(57) **Abstract**

A device and a method for executing a menu in a mobile terminal are provided. The device for executing a menu in a mobile terminal includes a display unit for displaying, when a request for displaying a menu list is input, the menu list, including at least one menu, in a first direction and an item list, including at least one item, for executing the menu in a second direction intersecting the first direction, a touch panel for detecting a touch action on the display unit, a position detection unit for detecting, when the touch action is detected, a touch position on the display unit and a menu execution unit for determining a menu of the menu list in the first direction and an item of the item list in the second direction by analyzing the touch position and for executing the determined menu using the determined item. The device and method provide increased convenience to a user of a touch screen.

## Description

### BACKGROUND OF THE INVENTION

### 1. Field of the Invention:

The present invention relates to a device and a method for executing a menu in a mobile terminal. More particularly, the present invention relates to a device and a method for executing a menu in a mobile terminal having a touch screen.

### 2. Description of the Related Art:

Mobile terminals have gained wide popularity and are widely used due to their mobility and the convenience of communication functions they provide to users. Recently, with the increasing development of information communication technology and semiconductor technology, mobile terminals are being provided with even more advanced functions. That is, mobile terminals now have various functions in addition to a communication function such as voice communication or a character message service. Moreover, the quality of mobile terminals has gradually developed regarding size, design, resolution, user interface, etc.

As part of the increasing trend in mobile terminal quality, an attempt to apply a touch screen to the mobile terminal has been made. A touch screen performs a function of an input device and a function of a display device thus allowing for the inputting and displaying of data on a single screen. Because a mobile terminal having a touch screen may not require a keypad, the mobile terminal can have an increased display area while enabling a user to intuitively manipulate input. Accordingly, manufacturers of mobile terminals have an increasing interest in the use of a touch screen in a mobile terminal and have actively performed related research and development. However, there remains further opportunity for improving user convenience with regard to a touch screen in a mobile terminal.

### SUMMARY OF THE INVENTION

An aspect of the present invention is to address the above-mentioned problems and disadvantages and to provide at least the advantages described below. Accordingly, an aspect of the present invention is to provide a device and a method for executing a menu that can improve user convenience in executing a specific menu using a specific item corresponding to a touch input operation of a user in a mobile terminal having a touch screen.

In accordance with an aspect of the present invention, a device for executing a menu in a mobile terminal is provided. The device includes a display unit for displaying, when a request for displaying a menu list is input, the menu list, including at least one menu, in a first direction and an item list, including at least one item, for executing the menu in a second direction intersecting the first direction, a touch panel for detecting a touch action on the display unit, a position detection unit for determining, when the touch action is detected, a touch position on the display unit and a menu execution unit for determining a menu of the menu list in the first direction and an item of the item list in the second direction by analyzing the touch position and for executing the determined menu using the determined item.

In accordance with another aspect of the present invention, a method of executing a menu in a mobile terminal having a touch screen is provided. The method includes displaying, when a request for displaying a menu list is input, at least one menu list in a first direction on the touch screen and displaying at least one item list for executing the menu in a second direction intersecting the first direction, determining, if a touch action is detected on the touch screen, a menu of the menu list in the first direction and an item of the item list in the second direction by analyzing a touch position detected on the touch screen and executing the determined menu using the determined item.

In accordance with yet another aspect of the present invention, a method of executing a menu in a mobile terminal having a touch screen is provided. The method includes displaying, when a request for displaying a menu list is input, at least one menu list in a first direction on the touch screen and displaying at least one item list for executing the menu in a second direction intersecting the first direction, determining, if a touch action is detected on the touch screen, a menu of the menu list in the first direction and an item of the item list in the second direction by analyzing a touch position detected on the touch screen and executing, if a menu of the first direction exists at the analyzed touch position, the determined menu using the determined item.

In accordance with still another aspect of the present invention, a method of executing a menu in a mobile terminal having a touch screen is provided. The method includes displaying, when a request for displaying a menu list is input, at least one menu list in a first direction on the touch screen and displaying at least one item list for executing the menu in a second direction intersecting the first direction, determining, if a touch action is detected on the touch screen, an item of the item list in the second direction by analyzing a touch position detected on the touch screen and displaying, if a menu of the first direction does not exist at the analyzed touch position, a previously displayed menu list.

In accordance with yet another aspect of the present invention, a method of executing a menu in a mobile terminal having a touch screen is provided. The method includes displaying, when a request for displaying a menu list is input in a first direction on the touch screen, at least one menu list and a first scroll key for scrolling menus and displaying in a second direction intersecting the first direction, at least one item list and a second scroll key for scrolling items, determining, if a touch action is detected on the touch screen, except for the first and second scroll key, a menu of the menu list in the first direction and an item of the item list in the second direction by analyzing a touch position detected on the touch screen and scrolling, if a touch action is detected on the first scroll key, the menus displayed in the first direction, and scrolling, if a touch action is detected on the second scroll key, the items displayed in the second direction.

In accordance with still another aspect of the present invention, a method of executing a menu in a mobile terminal having a touch screen is provided. The method includes displaying, when a request for displaying a menu list is input, at least one menu list occupying a space set in a first direction on the touch screen and displaying at least one item list occupying a space set in a second direction intersecting the first direction, determining, if a touch action is detected on the touch screen, a menu of the menu list in the first direction and an item of the item list in the second direction by analyzing a touch position detected on the touch screen and executing the determined menu using the determined item.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 is a block diagram illustrating a configuration of a mobile terminal according to an exemplary embodiment of the present invention;
FIG. 2 is a flowchart illustrating a method of executing a menu according to another exemplary embodiment of the present invention;
FIG. 3 is a flowchart illustrating an exemplary process of determining a menu and item in the method of FIG. 2;
FIGs. 4A and 4B are flowcharts illustrating an exemplary process of executing the determined menu using the determined item in the method of FIG. 2; and
FIGs. 5A to 5L illustrate examples of display screens when performing a process of executing a menu according to the method of FIG. 2.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In an exemplary embodiment of the present invention, the term "menu" indicates an option to which a function or information that can be provided in a mobile terminal is allocated. For example, a menu may be an option to which a function that can be provided by the mobile terminal, such as a camera, memo box, message box, and MP3 player, is allocated, or may be an option to which information generated when performing a specific function in the mobile terminal, such as an image, memo, message, and MP3 file, is allocated. A menu may include a lower level menu, or may be a lowest level menu that does not include a lower level menu. The term "menu list" indicates a list in which at least one menu of one specific level is arranged in a specific direction.

The term "item" indicates a command for executing a menu in the mobile terminal. An item may be differently provided according to a menu to be executed. For example, when a menu to be executed in the mobile terminal is a memo, items corresponding thereto may be viewing, addition, deletion and entire deletion of the memo. As another example, when a menu to be executed in the mobile terminal is an MP3 file, items corresponding thereto may be reproduction, transmission, deletion and entire deletion. The term "item list" indicates a list in which at least one item for executing a specific level menu is arranged in a specific direction.

Further, the term "touch" indicates an action in which a user of the mobile terminal makes contact to the touch screen. The contact to the touch screen may be made with a finger, a stylus and the like. The term "drag" indicates an action in which the user of the mobile terminal moves a touch while continuing the touch to the touch screen. The term "drop" indicates an action in which the user of the mobile terminal removes a touch from the touch screen, for example by lifting a stylus off of the touch screen.

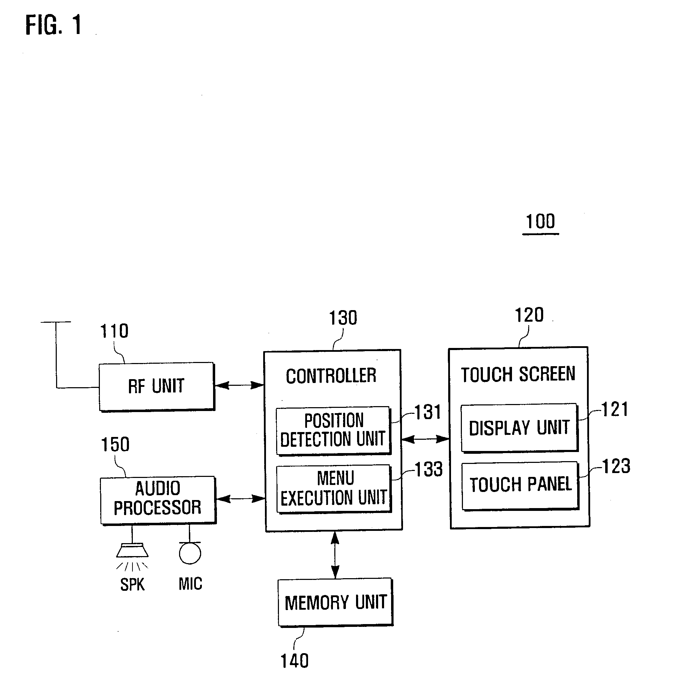

FIG. 1 is a block diagram illustrating a configuration of a mobile terminal according to an exemplary embodiment of the present invention. In the exemplary embodiment of the present invention, it is assumed that a mobile terminal is a mobile phone. Of course, the present invention is not limited to a mobile phone and may be employed in other mobile terminals such as a Personal Digital Assistant (PDA) and the like.

Referring to FIG. 1, a mobile terminal 100 includes a radio frequency (RF) unit 110, touch screen 120, controller 130, memory unit 140 and audio processor 150.

The RF unit 110 performs a wireless communication function of the mobile terminal 100. The RF unit 110 includes an RF transmitter for up-converting the frequency of a signal to be transmitted and for amplifying the signal. The RF unit 110 also includes an RF receiver for low-noise amplifying a received signal and for down-converting the frequency of the signal.

The touch screen 120 includes a display unit 121 and a touch panel 123. The display unit 121 displays various information including information about a state of the mobile terminal 100. The display unit 121 may use a liquid crystal display (LCD) and include an LCD controller, memory for storing display data and an LCD display element. When a request for displaying a menu list is input by the control of the controller 130, the display unit 121 displays at least one menu list in a first direction and displays at least one item list in a second direction intersecting the first direction. The touch panel 123 is mounted proximate the display unit 121 and includes a touch sensor and a signal converter. The touch sensor detects a change of a physical quantity, for example an electrical quantity such as resistance or capacitance, or a mechanical quantity such as displacement. The detected change is interpreted as a touch action such as a touch, a drag, or a drop. The signal converter converts the detected change of the physical quantity to an appropriate signal.

The controller 130 performs a function of controlling the general operations of the mobile terminal 100. Although not shown, the controller 130 includes a data processor having a transmitter for encoding and modulating a signal to be transmitted and a receiver for demodulating and decoding a received signal, for which the data processor includes a modem and a codec. The controller 130 also includes a position detection unit 131 and a menu execution unit 133. The position detection unit 131 receives a touch signal from the signal converter and, using the received touch signal, determines a touch position on the display unit 121. When a drag is generated from a touch position on the display unit 121, the position detection unit 131 determines a new touch position in the drag path. The menu execution unit 133 analyzes a touch position determined by the position detection unit 131. The menu execution unit 133 determines a menu of a menu list in the first direction and an item of an item list in the second direction corresponding to the analyzed touch position. The menu execution unit 133 scrolls through a menu list when a touch action is detected on a first scroll key and scrolls through an item list when a touch action is detected on a second scroll key. Further, the menu execution unit 133 executes the determined menu using the determined item when a drop is generated at a position on the display unit 121. If a menu of the first direction does not exist at the position where the drop is generated, the menu execution unit 133 displays the previously displayed menu list.

The memory unit 140 includes a program memory and a data memory. The program memory stores an operation program for the mobile terminal 100 and a program for executing a menu using the touch screen 120 according to an exemplary embodiment of the present invention. The data memory stores data generated while performing the programs. The memory unit 140 stores menu position information of a menu list displayed in the first direction and item position information of an item list displayed in the second direction. Further, the memory unit 140 stores menus in the menu list displayed in the first direction according to a user preference. For example, the menus may be stored according to the number of times each menu is executed by the control of the controller 130. Also, the memory unit 140 stores items in the item list displayed in the second direction according to a user preference, for example according to the number of times an item is executed by the control of the controller 130.

The audio processor 150 performs a function of reproducing an audio signal, received from an audio codec of a data processor, through a speaker SPK and of outputting an audio signal to be transmitted, that is input through a microphone MIC, to an audio codec of the data processor.

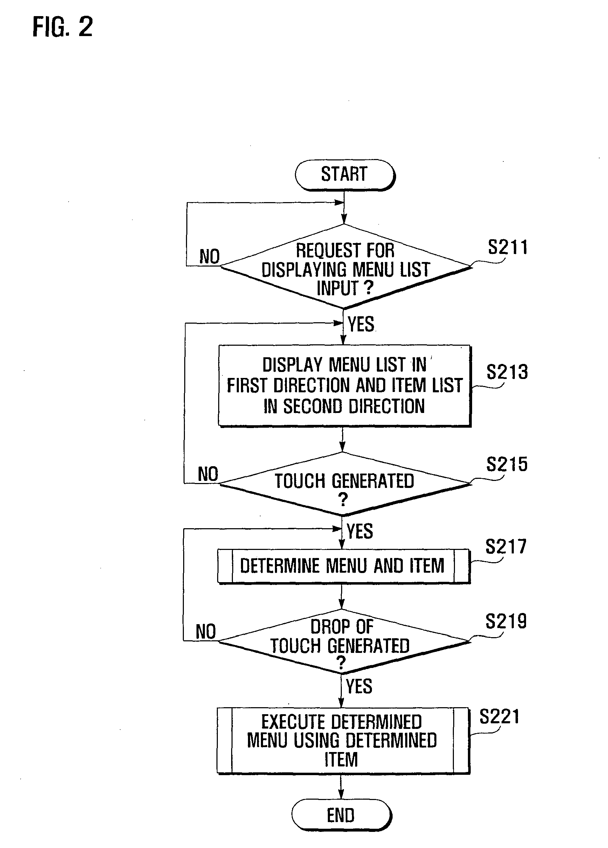

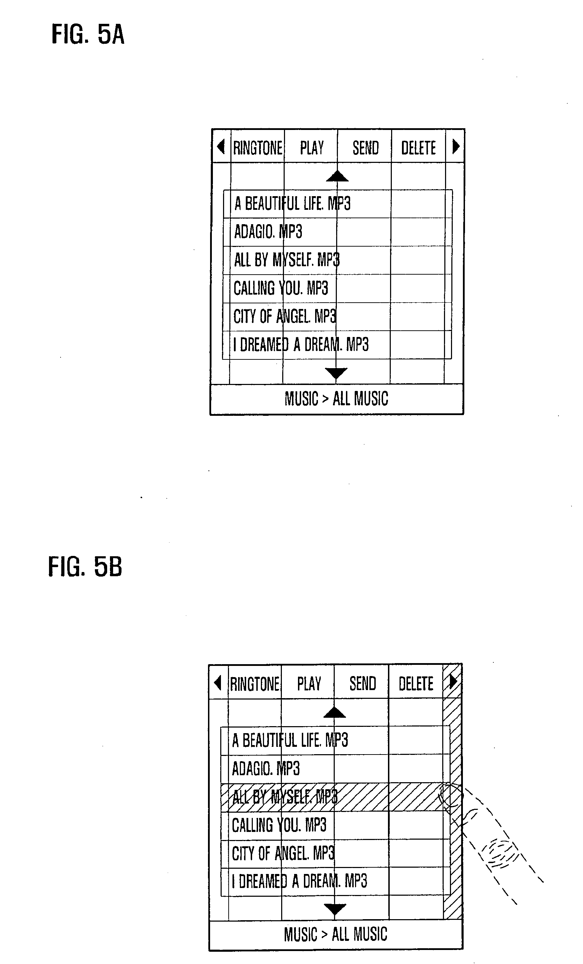

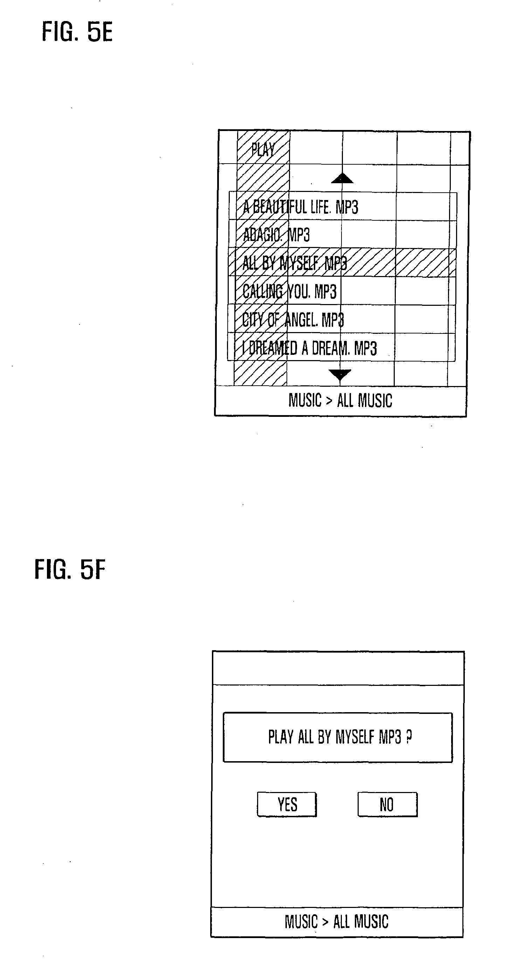

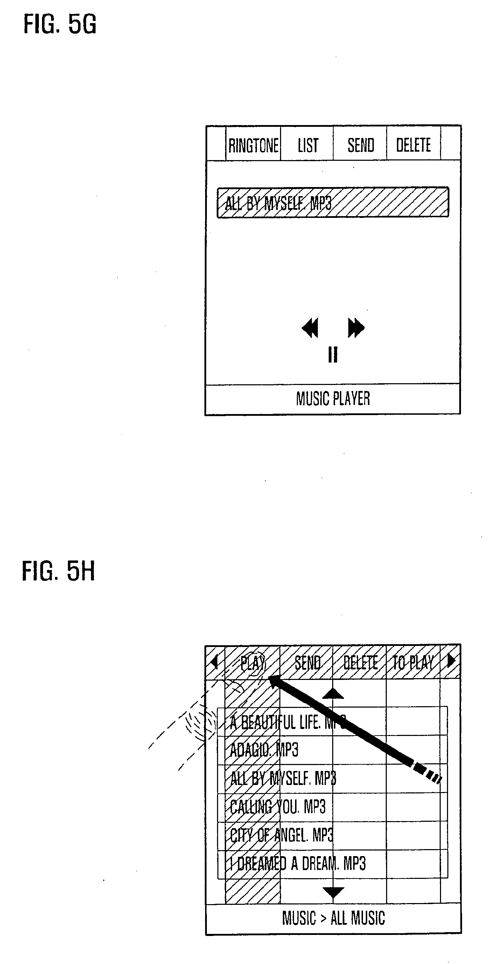

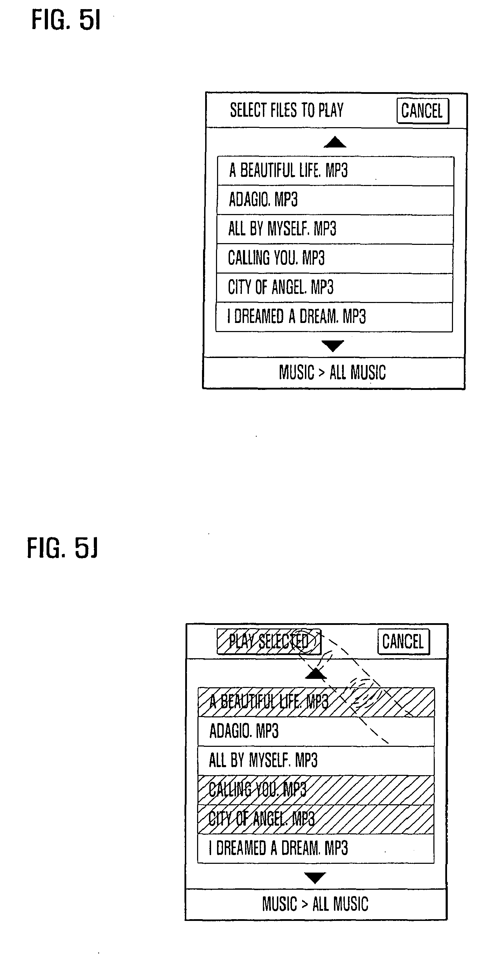

FIG. 2 is a flowchart illustrating a method of executing a menu according to another exemplary embodiment of the present invention. FIGs. 5A to 5L illustrate examples of screens that may be displayed when performing a process of executing a menu according to the method of FIG. 2. FIGs. 5A to 5D and FIG. 5H illustrate examples of screens that may be displayed when performing a process of determining a menu and an item, and FIGs. 5E to 5G and FIGs. 5I to 5L illustrate examples of screens that may be displayed when performing a process of executing a menu using an item.

Referring to FIG. 2, the controller 130 determines whether a request for displaying a menu list is input in step S211. If a request for displaying a menu list is input, the controller 130 controls to display a menu list and an item list on the touch screen 120 in step S213. One example of a displayed menu list and item list is shown in FIG. 5A. A menu of the menu list may be, for example, an MP3 file.

In step S213, the controller 130 controls to display at least one menu list in a first direction of the touch screen 120. The controller 130 controls to position each menu of a menu list displayed in the first direction in a preset space. Display characteristics of each preset space occupied by a menu of the menu list displayed in the first direction may be set by the user, for example according to number of execution times. Further, a first scroll key for scrolling through the menu list may also be displayed in the first direction.

Also in step S213, the controller 130 controls to display at least one item list in a second direction, wherein the second direction intersects the first direction. The controller 130 controls to position each item of an item list displayed in the second direction in a preset space. Display characteristics of each preset space occupied by an item of the item list displayed in the second direction may be set by the user, for example according to the number of times an item has been executed. Further, the controller 130 controls to arrange each item of the item list in a preset order according to user preference, for example according to number of execution times. Also, a second scroll key for scrolling through the item list may be displayed in the second direction.

The controller 130 determines whether a touch is generated on the touch screen 120 in step S215. If a touch is generated on the touch screen 120, the controller 130 determines a menu and an item corresponding to the touch position in step S217, as shown in FIGs. 5B to 5D and FIG. 5H. That is, the controller 130 analyzes the generated touch position and thereby determines a menu and item corresponding to the touch position to be executed by the user of the mobile terminal 100.

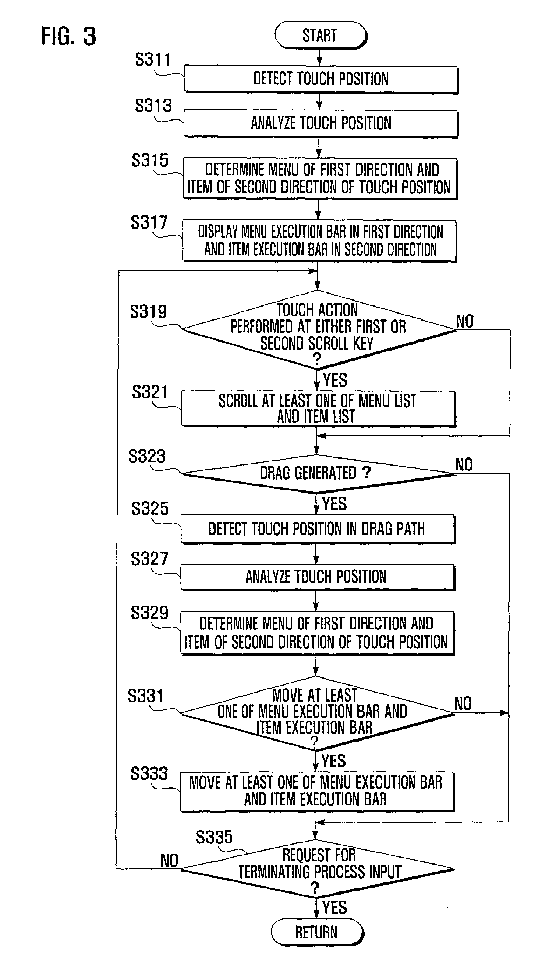

FIG. 3 is a flowchart illustrating an exemplary process of determining a menu and item of step S217 in the method of FIG. 2.

Referring to FIG. 3, when a touch is detected on the touch screen 120, the controller 130 detects a touch position in step S311.

The controller 130 analyzes the detected touch position in step S313.

The controller 130 determines a menu and item that correspond to the detected touch position in step S315. That is, the controller 130 determines a menu of the first direction and an item of the second direction corresponding to the detected touch position. More specifically, the controller 130 extracts menu position information of a menu of the first direction corresponding to the touch position and item position information of an item of the second direction corresponding to the touch position from menu position information and item position information stored in the memory unit 140. The controller 130 determines the menu corresponding to the extracted menu position information and the item corresponding to the extracted item position information.

The controller 130 then controls to display a menu execution bar in the second direction corresponding to the determined menu and to display an item execution bar in the first direction corresponding to the determined item in step S317, as shown in FIG. 5B. The controller 130 controls to display the menu execution bar at a space in the display unit 121 that corresponds to a space occupied by the determined menu in a menu list displayed in the first direction. Similarly, the controller 130 controls to display the item execution bar at a space in the display unit 121 that corresponds to a space occupied by the determined item in an item list displayed in the second direction.

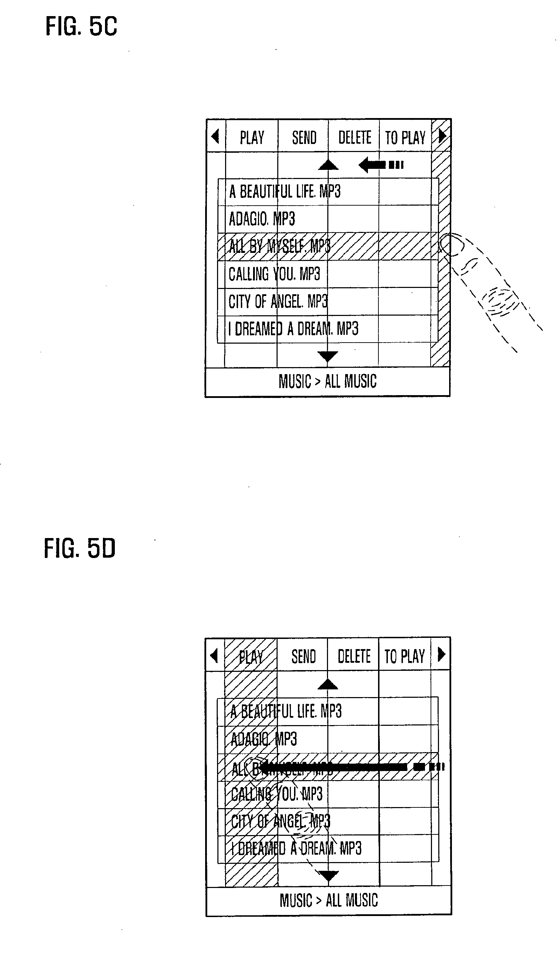

The controller 130 determines whether a touch action is detected corresponding to either the first scroll key or the second scroll key in step S319. If a touch action is detected corresponding to either the first scroll key or the second scroll key, the controller 130 scrolls at least one of the menu list corresponding to the first scroll key and the item list corresponding to the second scroll key in step S321. That is, the controller 130 scrolls the menu list if the touch action is performed at the first scroll key and scrolls the item list if the touch action is performed at the second scroll key. In an example as shown in FIG. 5C, a touch action is detected corresponding to a second scroll key so as to scroll through the item list. The controller 130 scrolls at least one of a menu list or an item list at a scroll speed that is initially set and may be altered by the user.

Next, the controller 130 determines whether a drag is generated from a touch position on the display unit 121 in step S323. If a drag is generated from a touch position on the display unit 121, the controller 130 detects the touch position in the drag path in step S325.

The controller 130 analyzes the detected touch position in step S327. The controller 130 determines a menu and item that can be executed by analyzing the detected touch position in step S329. That is, the controller 130 determines a menu of the first direction and an item of the second direction corresponding to the detected touch position. More specifically, the controller 130 extracts menu position information of a menu of the first direction and item position information of an item of the second direction corresponding to the touch position from menu position information and item position information stored in the memory unit 140. The controller 130 determines the menu corresponding to the extracted menu position information and the item corresponding to the extracted item position information.

The controller 130 determines whether to move at least one of the menu execution bar and the item execution bar to correspond to the detected touch position in step S331, by determining whether the determined menu corresponds to the currently displayed menu execution bar and whether the determined item corresponds to the currently displayed item execution bar. If at least one of the menu execution bar and the item execution bar is to be moved corresponding to the detected touch position, the controller 130 controls to move the corresponding execution bar in step S333, as shown in FIGs. 5D to 5H.

If the determined menu does not correspond to the currently displayed menu execution bar, the controller 130 moves the menu execution bar to the determined menu. The controller 130 controls to display the menu execution bar in the display unit 121 at the determined menu in the menu list displayed in the first direction. Further, if the determined item does not correspond to the currently displayed item execution bar, the controller 130 moves the item execution bar to the determined item. The controller 130 controls to display the item execution bar in the display unit 121 at the determined item in the item list displayed in the second direction. The controller 130 moves the execution bar at a speed proportional to the speed of the drag generated in the display unit 121.

After display of the menu execution bar corresponding to the determined menu and the item execution bar corresponding to the determined item at step S333, or if a drag of a touch is not generated from a touch position on the display unit 121 at step S323, the controller 130 determines whether a request for terminating the process of determining a menu and item is input in step S335. If a request for terminating a process of determining a menu and item is input, the controller 130 detects the request and the process returns to step S217 of FIG. 2.

If a request for terminating the process of determining a menu and item is not input, the process returns to step S319 and the controller 130 controls to repeat steps S319 to S335 until the request for terminating the process of determining a menu and item is input. The controller 130 determines a specific menu and item and then the process returns to the process of FIG. 2.

Returning to FIG. 2, when the menu and item are determined at step S217, the controller 130 determines whether a drop of a touch is generated on the display unit 121 in step S219. If a drop of a touch is generated on the display unit 121, the controller 130 executes the determined menu using a processing function allocated to the determined item in step S221, as shown in FIGs. 5E to 5G and FIGs. 5I to 5L. That is, the controller 130 executes a specific menu using a specific item corresponding to the drop generated in the touch screen 120. The controller 130 performs a different process according to whether a menu of the first direction of the touch position exists.

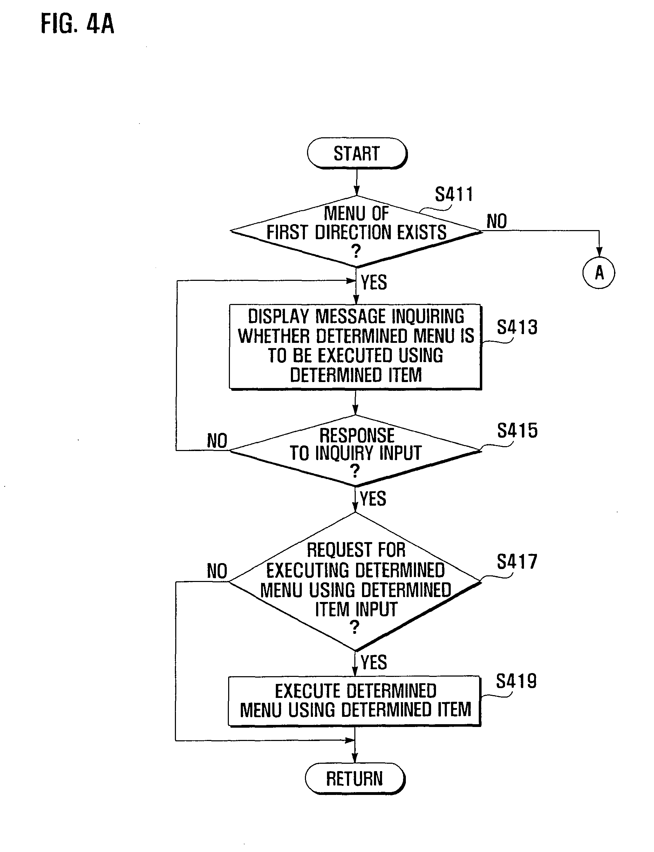

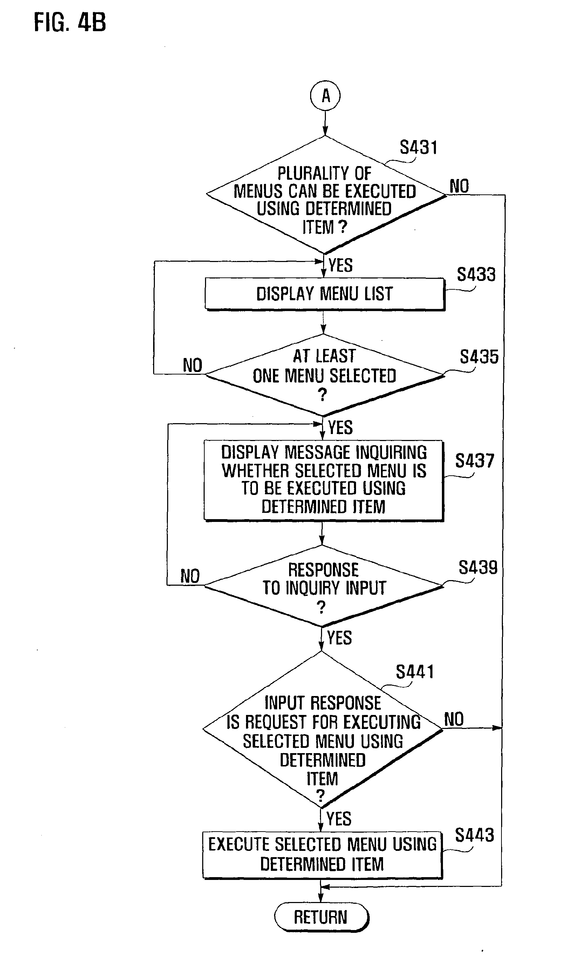

FIGs. 4A and 4B are flowcharts illustrating an exemplary process of executing the determined menu using the determined item of step S221 in the method of FIG. 2. FIG. 4A illustrates an exemplary process of executing one determined menu using the determined item, and FIG. 4B illustrates an exemplary process of executing at least one determined menu using the determined item.

Referring to FIG. 4A, the controller 130 determines whether a menu of the first direction exists at the touch position at which the drop is generated in step S411. If a menu of the first direction exists at the touch position at which the drop is generated, as shown in FIG. 5E, the controller 130 controls to display a message inquiring whether the determined menu is to be executed using the determined item in step S413, as shown in FIG. 5F. The inquiry message may be registered as a default in the mobile terminal 100 to correspond to a specific item, or may be selectively registered by the user.

The controller 130 determines whether a response to the inquiry is input in step S415. If a response to the inquiry is input, the controller 130 determines whether the input response is a request for executing the determined menu using the determined item in step S417. If the input response is not a request for executing the determined menu using the determined item, the controller 130 terminates the process of executing one determined menu using the determined item and the process returns to the process of FIG. 2.

If the input response is a request for executing the determined menu using the determined item at step S417, the controller 130 executes the determined menu using the determined item in step S419, as shown in FIG. 5G, and then the process returns to the process of FIG. 2.

Referring to FIG. 4B, if a menu of the first direction does not exist at the touch position at which the drop is generated, as shown in FIG. 5H, the controller 130 determines whether a plurality of menus can be executed using the determined item in step S431. If a plurality of menus cannot be executed using the determined item, the controller 130 terminates the process of executing at least one determined menu using the determined item and the process returns to the process of FIG. 2.

If a plurality of menus can be executed using the determined item, the controller 130 controls to display a menu list in step S433, as shown in FIG. 5I.

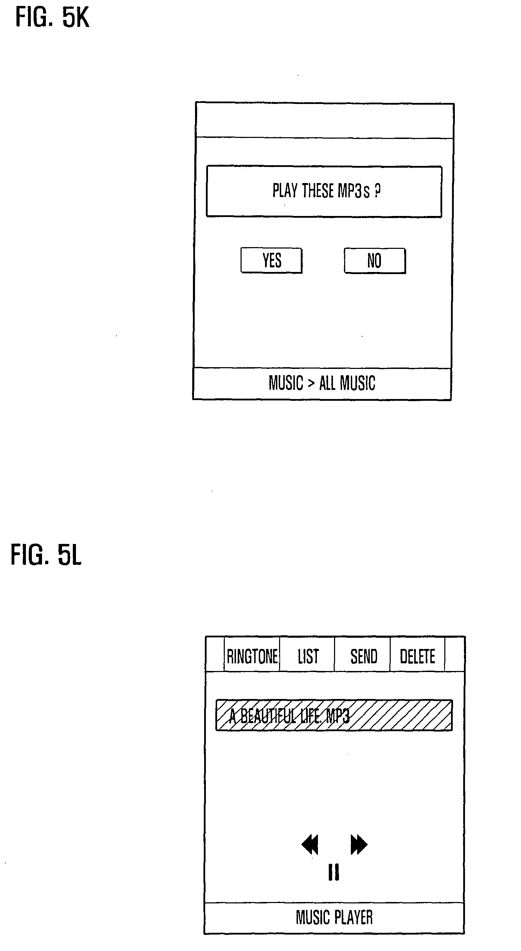

The controller 130 determines whether at least one menu is selected from a menu list in step S435, as shown in FIG. 5J. If at least one menu is selected from a menu list, the controller 130 controls to display a message inquiring whether the selected at least one menu is to be executed using the determined item in step S437, as shown in FIG. 5K. The inquiry message may be registered as a default in the mobile terminal 100 to correspond to a specific item, or may be selectively registered by the user.

The controller 130 determines whether a response to the inquiry is input in step S439. If a response to the inquiry is input, the controller 130 determines whether the input response is a request for executing the selected at least one menu using the determined item in step S441.

If the input response is not a request for executing the selected at least one menu using the determined item, the controller 130 terminates the process of executing at least one determined menu using the determined item and the process returns to the process of FIG. 2.

If the input response is a request for executing the selected at least one menu using the determined item at step S441, the controller 130 executes the selected at least one menu using the determined item in step S443, as shown in FIG. 5L, and then the process returns to the process of FIG. 2.

When the process of executing the determined menu using the determined item at step S221 is completed, the controller 130 terminates the process of executing the menu.

As described above, according to exemplary embodiments of the present invention, in a device and a method for executing a menu in a mobile terminal, when a request for displaying a menu list in the mobile terminal is input, at least one menu list is displayed in a first direction and an item list is displayed in a second direction intersecting the first direction. The mobile terminal determines a menu of the first direction and an item of the second direction corresponding to a touch position and executes the determined menu using the determined item. Accordingly, the user of the mobile terminal can execute a specific menu using a specific item with a single touch and drop. Thereby, when executing a menu to correspond to a touch input operation of the user of the mobile terminal, user convenience is improved and selection of a menu and item can be performed intuitively and distinguishably displayed.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims and their equivalents.

## Claims

1. A device for executing a menu in a mobile terminal, comprising:
a display unit for displaying, when a request for displaying a menu list is input, the menu list, including at least one menu, in a first direction and an item list, including at least one item, for executing the at least one menu in a second direction intersecting the first direction;
a touch panel for detecting a touch on the display unit;
a position detection unit for determining, when the touch is detected, a touch position on the display unit; and
a menu execution unit for determining a menu of the menu list in the first direction and an item of the item list in the second direction by analyzing the touch position and for executing the determined menu using the determined item.

2. The device of claim 1, further comprising a memory unit for storing menu position information of the menu list displayed in the first direction and item position information of the item list displayed in the second direction.

3. The device of claim 2, wherein the menu execution unit executes, if a drop action is detected at the touch position on the display unit, the determined menu using the determined item.

4. The device of claim 2, wherein the menu execution unit controls the display unit to display at least one of a menu execution bar in the second direction corresponding to the determined menu and an item execution bar in the first direction corresponding to the determined item.

5. The device of claim 3, wherein the position detection unit detects, if a drag action is detected from the touch position on the display unit, a touch position in the drag path.

6. The device of claim 3, wherein the menu execution unit controls the display unit to display a message inquiring whether the determined menu is to be executed using the determined item.

7. The device of claim 5, wherein a first scroll key for scrolling through the menu list is displayed in the first direction, and
the menu execution unit scrolls through the menu list if the touch position is at the first scroll key.

8. The device of claim 5, wherein a second scroll key for scrolling through the item list is displayed in the second direction, and
the menu execution unit scrolls through the item list if the touch position is at a second scroll key.

9. The device of claim 2, wherein the menu execution unit displays, if a menu of the first direction does not exist at the analyzed touch position, the previously displayed menu list.

10. The device of claim 9, wherein the menu execution unit executes, if a drop action is detected at the touch position on the display unit, the selected menu using the determined item.

11. The device of claim 2, wherein the memory unit stores menus in the menu list displayed in the first direction according to a number of times each menu is executed.

12. The device of claim 2, wherein the memory unit stores items in the item list displayed in the second direction according to a number of times each item is executed.

13. A method of executing a menu in a mobile terminal having a touch screen, the method comprising:
displaying, when a request for displaying a menu list is input, the menu list, including at least one menu, in a first direction on the touch screen and
an item list, including at least one item, for executing the at least one menu in a second direction intersecting the first direction;
determining, if a touch is detected on the touch screen, a menu of the menu list in the first direction and an item of the item list in the second direction by analyzing a touch position detected on the touch screen; and
executing the determined menu using the determined item.

14. The method of claim 13, wherein the executing of the determined menu is performed if a drop action is detected at the touch position.

15. The method of claim 14, wherein the executing of the determined menu comprises displaying a menu execution bar in the second direction corresponding to the determined menu.

16. The method of claim 14, wherein the executing of the determined menu comprises displaying an item execution bar in the first direction corresponding to the determined item.

17. The method of claim 14, wherein the determining of the menu of the menu list in the first direction and the item of the item list in the second direction comprises detecting, if a drag action is detected at the touch position, a touch position in the drag path.

18. The method of claim 14, wherein the executing of the determined menu comprises:
displaying a message inquiring whether the determined menu is to be executed using the determined item; and
receiving a response to the message.

19. The method of claim 17, further comprising:
displaying a first scroll key, for scrolling through the menu list, in the first direction; and
scrolling through the menu list if the touch position is at the first scroll key.

20. The method of claim 17, further comprising:
displaying a second scroll key, for scrolling through the item list, in the second direction; and
scrolling through the item list if the touch position is at the second scroll key.

21. The method of claim 13, further comprising:
determining, if a menu of the first direction does not exist at the analyzed touch position detected on the touch screen, an item of the second direction; and
displaying the previously displayed menu list.

22. The method of claim 13, wherein the displaying of the menu list comprises displaying characteristics of a space occupied by the at least one menu of the menu list in the first direction according to a number of times the at least one menu is executed.

23. The method of claim 13, wherein the displaying of the item list comprises displaying characteristics of a space occupied by the at least one item of the item list in the second direction according to a number of times the at least one item is executed.
